# EUROPEAN PATENT SPECIFICATION

(11) **EP 3 730 320 B1**
(45) Date of publication and mention of the grant of the patent: **12.01.2022**
(21) Application number: 20169571.5
(22) Date of filing: 15.04.2020
(51) Int. Cl.: B60C 19/00, H01Q 1/22, H01Q 9/26, B60C 15/06

(54) **TIRE**
REIFEN
PNEUMATIQUE

(30) Priority: 26.04.2019 JP 2019086175
(43) Date of publication of application: 28.10.2020
(73) Proprietor: Toyo Tire Corporation, Itami-shi, Hyogo 664-0847 (JP)
(72) Inventor: SUITA, Harunobu, Itami-shi, Hyogo 664-0847 (JP)
(74) Representative: Müller-Boré & Partner Patentanwälte PartG mbB

(56) References cited:
- WO-A1-2018/104623

## Description

### BACKGROUND OF THE INVENTION

### Field of the Invention

The present invention relates to a tire in which an electronic component is embedded.

### Related Art

Conventionally, tires in which an electric component such as RFID is embedded within the rubber structure have been known. With such tires, by an RFID tag embedded in the tire and a reader as an external device carrying out communication, it is possible to perform production control of tires, usage history management, etc. For example, Patent Document 1 shows a tire in which an electronic component is arranged at the boundary surface of two difference substances. The boundary surface of two substances at which this electronic component is arranged is a surface extending from a free edge of a carcass ply.

Patent Document 1: Japanese Unexamined Patent Application, Publication No. 2008-265750
WO 2018104623 discloses a tyre suitable for running flat. The tyre comprises a crown, two sidewalls and two beads, a carcass reinforcement with at least one carcass ply anchored in each bead and a sidewall insert arranged axially to the inside, relative to at least the carcass ply, wherein said tyre is equipped with an electronic member comprising at least one radiofrequency transponder and wherein each bead comprises a bead wire that rotates about a reference axis and H is one of the points of the bead wire closest to the axis of revolution, the electronic member is positioned axially in an area of the tyre delimited by at least one of the beads and one of the sidewalls and radially to the outside at a radial distance of more than 20 mm from the point H.

### SUMMARY OF THE INVENTION

With the technology shown in Patent Document 1, the boundary surface between two substances at which the electronic component is arranged becomes a surface extending from a free edge of the carcass ply; however, at this portion, stress and distortion tends to occur upon the tire deforming. Therefore, the electronic portion arranged at this portion is affected by the stress and distortion upon the tire deforming, and there is a possibility of no longer maintaining the function as an electronic component.

The present invention has been made taking account of the above-mentioned problem, and an object thereof is to provide a tire which can maintain the function of an embedded electronic component, by arranging the electronic component at a position which is hardly affected by the stress and distortion within the tire structure. The present invention is defined by the features described in the independent claims. Preferred embodiments are defined in the dependent claims.

A tire (for example, the tire 1) according to a first aspect of the present invention includes: a bead core (for example, the bead core 21); a bead filler (for example, the bead filler 22) which extends to an outer side in a tire-radial direction of the bead core; a carcass ply (for example, the carcass ply 23) which extends from the bead core to another bead core and is folded around the bead core; a rim strip rubber (for example, the rim strip rubber 32) which is arranged at least at an outer side in a tire-width direction of the carcass ply which has been folded back around the bead core; and a side-wall rubber (for example, the side-wall rubber 30) covering a part on an outer side in the tire-width direction of the rim strip rubber, in which an electronic component (for example, the RFID tag 40) is provided between the rim strip rubber and the side-wall rubber; the electronic component (40) is covered by a coating rubber sheet (431, 432), and the coating rubber sheet (431, 432) is configured from rubber having a higher modulus than the side-wall rubber (30), and a lower modulus than the rim strip rubber (32). The modulus indicates 100% elongation modulus (M100) under a 23°C atmosphere, measured in accordance with "3.7 stress at a given elongation, S" of JIS K6251:2010.

According to a second aspect of the present invention, in the tire as described in the first aspect, when establishing a length of a line indicating a boundary surface of the rim strip rubber and the side-wall rubber in a cross-sectional view in the tire-width direction as a reference distance, the electronic component may be disposed between the rim strip rubber and the side-wall rubber within a range up to a position 50% of the reference distance from a position at a tire-radial direction outside end (for example, the tire-radial direction outside end 32A of the rim strip rubber 32) of the rim strip rubber towards a tire-radial direction inside end (for example, the tire-radial direction inside end 30B of the side-wall rubber 30) of the side-wall rubber.

According to a third aspect of the present invention, the tire as described in the first or second aspect may further include a pad member (for example, the pad member 34) which covers an outer side in the tire-width direction of a folding end (for example, the folding end 25A) of the carcass ply, in which the rim strip rubber covers part of an outer side in the tire-width direction of the pad member, and the side-wall rubber covers a part on an outer side in the tire-width direction of the rim strip rubber and a part on an outer side in the tire-width direction of the pad member.

According to the present invention, it is possible to provide a tire which can maintain the function of an embedded electronic component, by arranging the electronic component at a position which is hardly affected by the stress and distortion within the tire structure.

### BRIEF DESCRIPTION OF THE DRAWINGS

FIG. 1 is a view showing a half section in a tire-width direction of a tire according to a first embodiment of the present invention;
FIG. 2 is a partially enlarged cross-sectional view of a tire according to the first embodiment of the present invention; FIG. 3 is a view showing results of an in-plane distribution simulation of strain energy in a case of applying load to the tire of the first embodiment of the present invention;
FIG. 4A is a view showing an RFID tag protected by a protective member in a tire according to a second embodiment of the present invention;
FIG. 4B is a view showing a b-b cross section in FIG. 4A;
FIG. 4C is a view showing a c-c cross section in FIG. 4A;
FIG. 5 is a view showing a cross section prior to interposing the RFID tag by rubber sheets in a case of not filling rubber inside a spring antenna;
FIG. 6 is a view showing a cross section after interposing the RFID tag by rubber sheets in a case of not filling rubber inside a spring antenna;
FIG. 7 is a view showing a cross section after interposing the RFID tag by rubber sheets in a case of not filling rubber inside a spring antenna;
FIG. 8 is a view showing the RFID tag prior to filling rubber inside a spring antenna in a tire according to a third embodiment of the present invention;
FIG. 9 is a view showing the RFID tag after filling rubber inside a spring antenna in a tire according to the third embodiment of the present invention;
FIG. 10 is a view showing the RFID tag prior to interposing by rubber sheets, in a tire according to the third embodiment of the present invention; and
FIG. 11 is a view showing the RFID tag interposed by a rubber sheet, in a tire according to the third embodiment of the present invention.

### DETAILED DESCRIPTION OF THE INVENTION

### <First Embodiment>

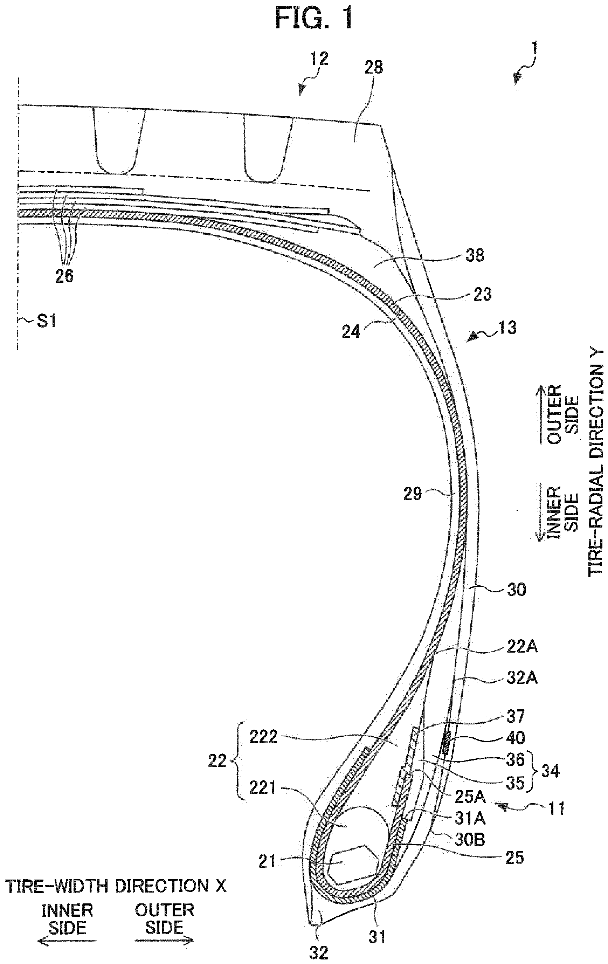

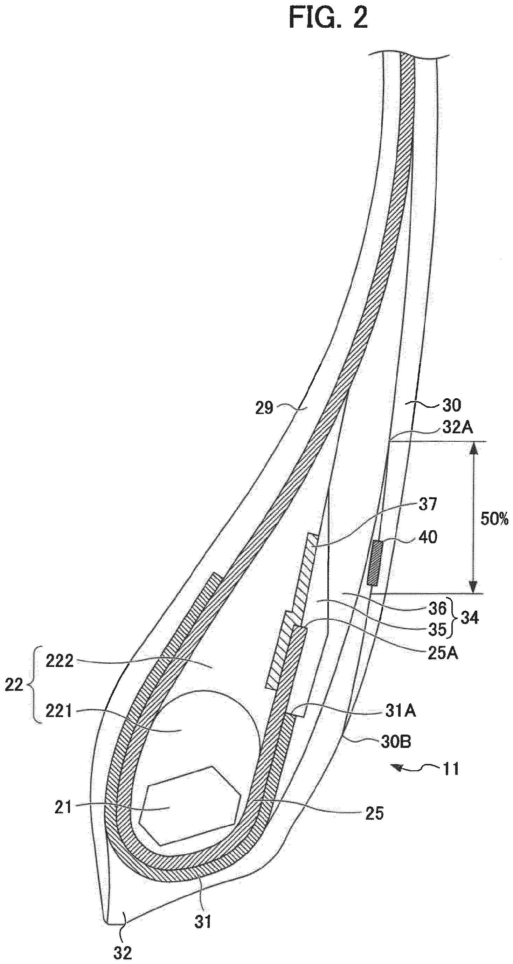

Hereinafter, a first embodiment of the present invention will be explained while referencing the drawings. FIG. 1 is a view showing a half section in a tire-width direction of a tire 1 according to the present embodiment. The basic structure of the tire is left/right symmetric in the cross section of the tire-width direction; therefore, a cross-sectional view of the right half is shown herein. In the drawings, the reference symbol S1 is the tire equatorial plane. The tire equatorial plane S1 is a plane orthogonal to the tire rotation axis, and is positioned in the center of the tire-width direction. Herein, tire-width direction is a direction parallel to the tire rotation axis, and is the left/right direction of the paper plane of the cross-sectional view in FIG. 1. In FIG. 1, it is illustrated as the tire-width direction X. Then, inner-side of tire-width direction is a direction approaching the tire equatorial plane S1, and is the left side of the paper plane in FIG. 1. Outer-side of tire-width direction is a direction distancing from the tire equatorial plane S1, and is the right side of the paper plane in FIG. 1. In addition, tire-radial direction is a direction perpendicular to the tire rotation axis, and is the vertical direction in the paper plane of FIG. 1. In FIG. 1, it is illustrated as the tire-radial direction Y. Then, outer-side of tire-radial direction is a direction distancing from the tire rotation axis, and is the upper side of the paper plane in FIG. 1. Inner-side of tire-radial direction is a direction approaching the tire rotation axis, and is the lower side of the paper plane in FIG. 1. The same also applies to FIG. 2.

The tire 1 is a tire for trucks and buses, for example, and includes a pair of beads 11 provided at both sides in the tire width direction, tread 12 forming a contact patch with the road surface, and a pair of sidewalls 13 which extends between the pair of beads and the tread 12.

The bead 11 includes an annular bead core 21 formed by wrapping around several times bead wires made of metal coated with rubber, and a bead filler 22 of tapered shape extending to the outer side in the tire-radial direction of the bead core 21. The bead filler 22 is configured by a first bead filler 221 which covers the outer circumference of the bead core 21, and a second bead filler 222 which is arranged on the outer side in the tire-radial direction of the first bead filler 221. The second bead filler 222 is configured from rubber with a modulus higher than an inner liner 29 and side wall rubber 30 described later. Then, the first bead filler 221 is configured from rubber of an even higher modulus than the second bead filler 222. It should be noted that the first bead filler 221 may be a form not covering the outer circumference of the bead core 21, if at least a part thereof is arranged on the outer side in the tire-radial direction of the bead core 21. In addition, the bead filler 22 may be formed from rubber of one type. In other words, it may not necessarily be divided into the first bead filler 221 and second bead filler 222. The bead core 21 is a member which plays a role of fixing a tire filled with air to the rim of a wheel which is not illustrated. The bead filler 22 is a member provided in order to raise the rigidity of the bead peripheral part and to ensure high maneuverability and stability.

A carcass ply 23 constituting a ply serving as the skeleton of the tire is embedded inside of the tire 1. The carcass ply 23 extends from one bead core to the other bead core. In other words, it is embedded in the tire 1 between the pair of bead cores 21, in a form passing through the pair of side walls 13 and the tread 12. As shown in FIG. 1, the carcass ply 23 includes a ply body 24 which extends from one bead core to the other bead core, and extends between the tread 12 and bead 11, and a ply folding part 25 which is folded around the bead core 21. Herein, a folding end 25A of the ply folding part 25 is positioned more to an inner side in the tire-radial direction than a tire-radial direction outside end 22A of the bead filler 22. The carcass ply 23 is configured by a plurality of ply cords extending in a tire-width direction. In addition, a plurality of ply cords is arranged side by side in a tire circumferential direction. This ply cord is configured by a metal steel cord, or an insulated organic fiber cord such as polyester or polyamide, or the like, and is covered by rubber.

In the tread 12, a plurality of layers of steel belts 26 is provided in the outer side in the tire radial direction of the carcass ply 23. The steel belt 26 is configured by a plurality of steel cords covered by rubber. By providing the steel belts 26, the rigidity of the tire is ensured, and the contact state of the road surface with the tread 12 improves. In the present embodiment, although four layers of steel belts 26 are provided, the number of layered steel belt 26 is not limited thereto.

The tread rubber 28 is provided at the outer side in the tire-radial direction of the steel belt 26. A tread pattern (not illustrated) is provided to the outer surface of the tread rubber 28, and this outer surface serves as a contact surface which contacts with the road surface.

In the vicinity of the outer side in the tire-width direction of the tread 12, in a region between the carcass ply 23, and the steel belts 26 / tread rubber 28, a shoulder pad 38 is provided. This shoulder pad 38 extends until a region of the outer side in the tire-radial direction of the side wall 13, and part thereof forms an interface between side wall rubber 30 described later. In other words, in the region of the outer side in the tire radial direction of the side wall 13, a part of the shoulder pad 38 is present on the inner side in the tire width direction of the side wall rubber 30. The shoulder pad 38 consists of a rubber member having cushioning, and exhibits a cushion function between the carcass ply 23 and steel belt 26. In addition, since the shoulder pad 38 consists of rubber having a characteristic of low heat buildup, it is possible to suppress heat generation effectively, by extending until the side wall 13.

In the bead 11, side wall 13 and tread 12, an inner liner 29 serving as a rubber layer constituting an inside wall surface of the tire 1 is provided to a tire inner cavity side of the carcass ply 23. The inner liner 29 is configured by air permeation resistant rubber, whereby the air inside the tire inner cavity is prevented from leaking to outside.

In the side wall 13, the side wall rubber 30 constituting the outer wall surface of the tire 1 is provided to the outer side in the tire-width direction of the carcass ply 23. This side wall rubber 30 is a portion which bends the most upon the tire exhibiting a cushioning action, and usually flexible rubber having fatigue resistance is adopted therein.

On the inner side in the tire radial direction of the carcass ply 23 provided around the bead core 21 of the bead 11, a steel chafer 31 serving as a reinforcement ply is provided so as to cover at least part of the carcass ply 23. The steel chafer 31 also extends to the outer side in the tire-width direction of the ply folding part 25 of the carcass ply 23, and an end part 31A of this steel chafer 31 is positioned more to the inner side in the tire-radial direction than the folding end 25A of the carcass ply 23. This steel chafer 31 is a metal reinforcement layer configured by metal steel cords, and is covered by rubber.

Rim strip rubber 32 is provided at the inner side in the tire-radial direction of the steel chafer 31. This rim strip rubber 32 is arranged along the outer surface of the tire, and connects with the side wall rubber 30. This rim strip rubber 32 and side wall rubber 30 are rubber members constituting the outer surface of the tire.

Then, at the outer side in the tire-radial direction of the end part 31A of the steel chafer 31, which is at the outer side in the tire-width direction of the folding part 25 of the carcass ply 23 and bead filler 22, a first pad 35 is provided. This first pad 35 is provided at the outer side in the tire-width direction of at least the folding end 25A of the carcass ply 23. The outer side in the tire-radial direction of the first pad 35 is formed so as to taper as approaching the outer side in the tire-radial direction.

Furthermore, a second pad 36 is provided so as to cover the outer side in the tire-width direction of the first pad 35. In more detail, the second pad 36 is provided so as to cover the outer side in the tire-width direction of part of the steel chafer 31, the first pad 35, part of the second bead filler 222, and part of the ply body 24 of the carcass ply 23. Then, the side wall rubber 30 is arranged at an outer side in the tire-width direction in a tire-radial direction outside region of the second pad 36, and the rim strip rubber 32 is arranged at an outer side in the tire-width direction in a tire-radial direction inside region of the second pad 36. In other words, the second pad 36 is provided between the first pad 35, etc., and the rim strip rubber 32 and side wall rubber 30, which are members constituting the outer surface of the tire.

The first pad 35 and second pad 36 constitute the pad member 34, and this pad member 34 is configured from rubber of a higher modulus than the modulus of the tire-radial direction outside portion (second bead filler 222) of the bead filler 22. In more detail, the second pad 36 is configured by rubber of higher modulus than the second bead filler 222, and the first pad 35 is configured by rubber of even higher modulus than the second pad 36. The first pad 35 and second pad 36 have a function of mitigating sudden distortion caused by the local rigidity point of change at the folding end 25A of the carcass ply 23 and the end part 31A of the steel chafer 31.

The rubber sheet 37 serving as a reinforced rubber sheet is arranged in the vicinity of the folding end 25A of the carcass ply 23, between the bead filler 22 and pad member 34. The rubber sheet 37 is arranged so as to cover the folding end 25A of the carcass ply 23 from the inner side in the tire-width direction. The rubber sheet 37 is configured from rubber of higher modulus than the second bead filler 222. More preferably, it is configured from rubber of a modulus substantially equal to that of the first pad 35.

Generally, at the folding end 25A of the carcass ply 23, stress tends to concentrate. However, by providing the rubber sheet 37 serving as the aforementioned reinforced rubber sheet, it becomes possible to effectively suppress the concentration of stress. It should be noted that, although the pad member 34 is configured from the first pad 35 and second pad 36 in the present embodiment, the pad member 34 may be configured from one member. However, as mentioned above, by configuring the pad member 34 from the first pad 35 and second pad 36, and further adopting a configuration arranging the rubber sheet 37, it is possible to more effectively suppress the concentration of stress.

It should be noted that the position of the tire-radial direction outside end 37A of the rubber sheet 37 in the present embodiment is located more to the outer side in the tire-radial direction than the tire-radial direction outside end 22A of the bead filler 22. However, the position of the tire-radial direction outside end 37A of the rubber sheet 37 may be made to substantially match the position of the tire-radial direction outside end 22A of the bead filler 22. It should be noted that the rubber sheet 37 preferably adopts a form arranged so as to cover the folding end 25A of the carcass ply 23 from the inner side in the tire-width direction as shown in FIG. 1; however, a configuration covering the folding end 25A of the carcass ply 23 from the outer side in the tire-width direction may be adopted. Even in this case, it is possible to mitigate the concentration of stress.

Herein, when explaining by reorganizing the relationships between the rim strip rubber 32 and members at the circumference thereof, the rim stirp rubber 32 is at least arranged at the outer side in the tire-width direction of the ply folding part 25 of the carcass ply 23 which has been folded back around the bead core 21. In the present embodiment, the rim strip rubber 32 covers a part on the outer side in the tire-width direction of the pad member 34 arranged at the outer side in the tire-width direction of the folding part 25 of the carcass ply 23. Then, the side-wall rubber 30 covers a part on the outer side in the tire-width direction of the rim strip rubber 32 and a part on the outer side in the tire-width direction of the pad member 34. By providing such a pad member 34, it is possible to effectively curb the concentration of stress in the vicinity of the joining part of the rim strip rubber 32 and side-wall rubber 30.

An RFID tag 40 is embedded as an electrical component in the tire 1 of the present embodiment. The RFID tag 40 is a passive transponder equipped with an RFID chip and an antenna for performing communication with external equipment, and performs wireless communication with a reader (not illustrated) serving as the external equipment. As the antenna, a coil-shaped spring antenna, plate-shaped antenna, and various types of rod-shaped antennas can be used. For example, it may be an antenna formed by printing a predetermined pattern on a flexible substrate. The antenna is established at an antenna length optimized according to the frequency band, etc. to be used. In a storage part inside the RFID chip, identification information such as a manufacturing number and part number is stored.

FIG. 2 is an enlarged cross-sectional view showing the periphery of an embedded part of the RFID tag 40 in the tire 1 of FIG. 1. As shown in FIGS. 1 and 2, the RFID tag 40 is embedded between the rim stripper rubber 32 and the side wall rubber 30.

Normally, in a case of the boundary surface of two substances being the surface extending from the folding end 25A of the carcass ply 23, distortion tends to occur at this surface. In addition, if considering the communication quality, it is preferable for the RFID tag 40 to be arranged as much as possible in a portion close to the outer surface of the tire 1.

Therefore, in the present embodiment, the RFID tag 40 is embedded in the boundary surface between the rim strip rubber 32 and the side wall rubber 30, closer to the outer surface of the tire 1 than the boundary surface between the second bead filler 222 and first pad 35.

The RFID tag 40 can thereby keep the function thereof, without being affected by excessive distortion. Additionally, the RFID tag 40 is strongly retained due to being arranged to be retained to the rim strip rubber 32 consisting of rubber of higher modulus than the second bead filler 222.

It should be noted that, when establishing the modulus of the second pad 36 as a reference, it is preferable for the side wall rubber 30 to be established as a modulus 0.4 to 0.6 times that of the second pad 36. In addition, the first pad 35 is preferably established as a modulus 1.1 to 1.2 times that of the second pad 36. In addition, the second bead filler 222 is preferably established as a modulus of 0.7 to 0.8 that of the second pad. Then, the rim strip rubber 32 is preferably established as a modulus of 0.8 to 1 that of the second pad 36, when based on the modulus of the second pad 36. By establishing such a modulus, it is possible to keep the balance between flexibility as a tire and rigidity in the vicinity of the bead 11. It should be noted that the modulus indicates 100% elongation modulus (M100) under a 23°C atmosphere, measured in accordance with "3.7 stress at a given elongation, S" of JIS K6251:2010.

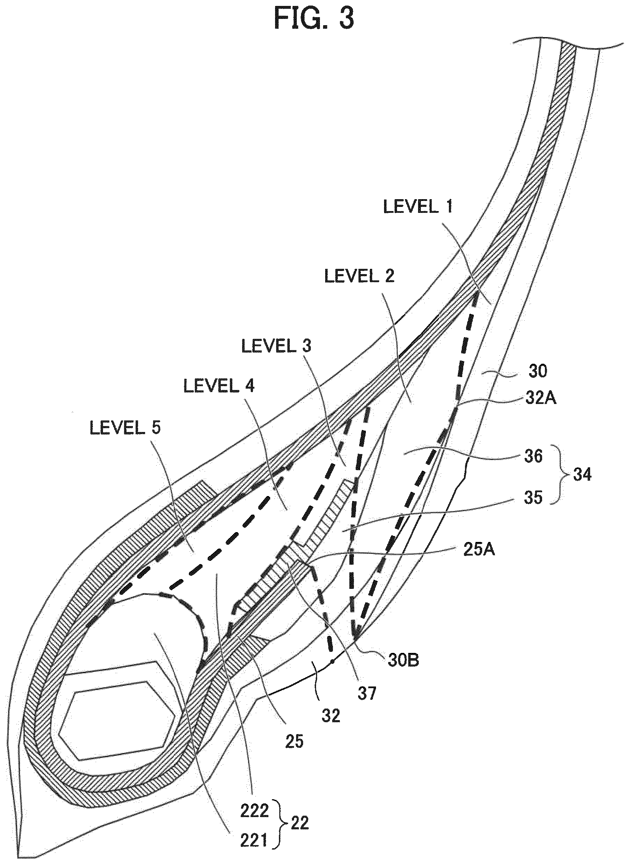

FIG. 3 is a view showing the results of in-plane distribution simulation of strain energy, in a case of assembling the tire 1 of the present embodiment to a rim, and applying 100% load. The enlarged cross-sectional view shown in FIG. 3 displays by dividing the region in five, according to the magnitude of the strain energy. Herein, a region having the highest strain energy is defined as level 5, a region having high strain energy is defined as level 4, a region in which the strain energy somewhat declined is defined as level 3, a region in which the strain energy further declined is defined as level 2, and the region in which the strain energy declined the most is defined as level 1. FIG. 3 displays by dividing the regions with bold dotted lines as the boundary.

The boundary surface between the rim strip rubber 32 and side-wall rubber 30 becomes a region of mostly level 1, and is a region having low strain energy, and thus very preferable upon arranging the RFID tag 40.

Then, the RFID tag 40 is more preferably arranged in a predetermined region on the outer side in the tire-radial direction at the boundary surface between the rim strip rubber 32 and side-wall rubber 30. For example, in the cross-sectional view in the tire-width direction shown in FIG. 2, when establishing the length of a line indicating the boundary surface of the rim strip rubber 32 and side-wall rubber 30 (distance along the line indicating the boundary surface from the tire-radial direction outside end 32A of the rim strip rubber 32 until the tire-radial direction inside end 30B of the side-wall rubber 30) as a reference distance, it is preferable for the RFID tag 40 to be arranged between the rim strip rubber 32 and side-wall rubber 30 within a range up to a position 50% of the reference distance from the position of the tire-radial direction outside end 32A of the rim strip rubber 32 towards the tire-radial direction inside end 30B of the side-wall rubber 30. Since it is thereby possible to arranged the RFID tag 40 at a position distanced from the rim fixing the tire 1, it is possible to suitably ensure communication performance, and obtain higher durability.

Herein, the RFID tag 40 is mounted prior to the vulcanization step in the manufacturing process of the tire. In the present embodiment, the RFID tag 40 is mounted to the rim strip rubber 32 or side-wall rubber 30 prior to being vulcanized. At this time, since the rim strip rubber 32 and side-wall rubber 30 are in the raw rubber state prior to vulcanization, the RFID tag 40 may be pasted to the rim strip rubber 32 or side-wall rubber 30 using the adhesiveness thereof. Alternatively, in the case of the adhesiveness being low or the like, it may be pasted using an adhesive or the like. After pasting the RFID tag 40, the RFID tag 40 is interposed by the rim strip rubber 32 and side-wall rubber 30. Subsequently, the green tire in which the respective constituent members including the RFID tag 40 are assembled is vulcanized in the vulcanization step to produce the tire.

In the present embodiment, since it is possible to paste the RFID tag 40 to the rim strip rubber 32 or side-wall rubber 30 in the raw rubber state during tire manufacturing in this way, the assembly work of the RFID tag 40 in the manufacturing process of the tire is easy. In particular, since the rim strip rubber 32 has a certain degree of rigidity even in the raw rubber state, the assembly work of the RFID tag 40 is easy.

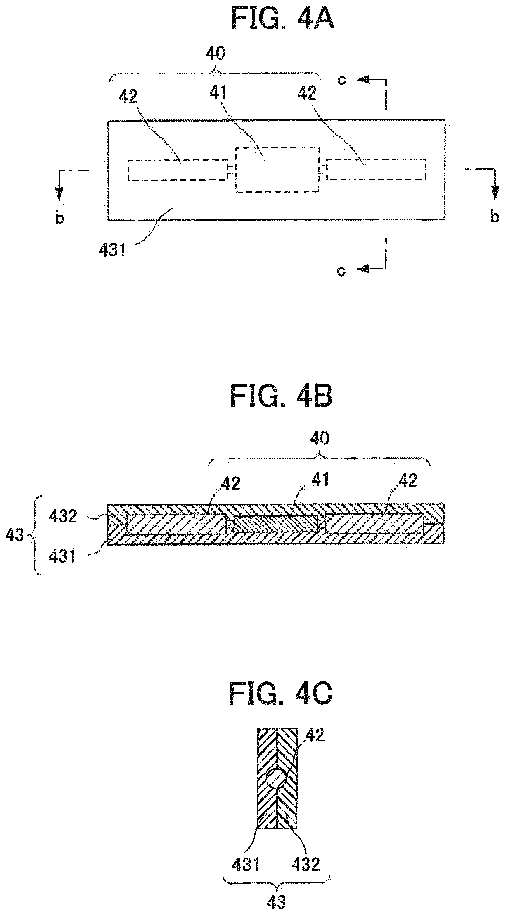

It should be noted that the RFID tag 40 embedded in the tire 1 often has a longitudinal direction if including an antenna, as shown as the RFID 40 in FIG. 4 described later. Such an RFID tag 40 is preferably embedded in the tire 1 so that the longitudinal direction thereof becomes the direction of the tangential line relative to the circumferential direction of the tire, for example, i.e. direction orthogonal to the paper plane in the cross-sectional views of FIGS. 1 and 2. By embedding in this way, stress will hardly act on the RFID tag 40 when the tire 1 deforms.

It should be noted that the RFID tag 40 may be sandwiched between the rim strip rubber 32 and side-wall rubber 30 in a state coated by a protective member of rubber or the like; however, it may be sandwiched directly between the rim strip rubber 32 and side-wall rubber 30 without covering by the protective member.

It should be noted that, in the present embodiment, although the RFID tag 40 is embedded in the tire as an electronic component, the electronic component embedded in the tire is not limited to an RFID tag. For example, it may be various electronic components such as a sensor which carries out wireless communication. In addition, since the electronic component handles electrical information such as sending and receiving of electrical signals, there is a possibility of the performance declining due to metal components being present in the vicinity thereof. In addition, there is a possibility of the electronic component being damaged by excessive stress being applied. Consequently, even in the case of embedding various electronic components in a tire, it is possible to obtain the effects of the present invention. For example, the electronic component may be a piezoelectric element or strain sensor.

According to the tire 1 of the present embodiment, the following effects are exerted.
(1) The tire 1 according to the present embodiment is a tire 1 including the bead core 21; bead filler 22 which extends to the outer side in the tire-radial direction of the bead core 21; the carcass ply 23 which extends from the bead core 21 to another bead core 21, and is folded back around the bead core 21; the rim strip rubber 32 which is at least arranged at the outer side in the tire-width direction of the carcass ply 23 folded back around the bead core 21; and the side-wall rubber 30 covering part in the outer side in the tire-width direction of the rim strip rubber 32, in which the RFID tag 40 is provided between the rim strip rubber 32 and side-wall rubber 30. By arranging the RFID tag 40 at a portion which hardly receives the influence of stress and distortion in the tire structure in this way, it is possible to retain the function of the embedded RFID tag 40.
(2) In the tire 1 according to the present embodiment, in the cross-sectional view in the tire-width direction, when establishing the length of a line indicating the boundary surface of the rim stirp rubber 32 and side-wall rubber 30 as a reference distance, the RFID tag 40 is arranged between the rim strip rubber 32 and side-wall rubber 30, within a range up to a position 50% of the reference distance from a position of the tire-radial direction outside end 32A of the rim strip rubber 32 towards the tire-radial direction inside end 30B of the side-wall rubber 30. Since it is thereby possible to arrange the RFID tag 40 at a position distanced from the rim fixing the tire 1, it is possible to suitably secure communication performance, and obtain high durability.
(3) The tire 1 according to the present embodiment further includes the pad member 34 covering the outer side in the tire-width direction of the folding end 25A of the carcass ply 23, the rim strip rubber 32 covers a part on the outer side in the tire-width direction of the pad member 34, and the side-wall rubber 30 covers a part on the outer side in the tire-width direction of the rim strip rubber 32, and part on the outer side in the tire-width direction of the pad member 34. It is thereby possible to effectively curb the concentration of stress in the vicinity of the joining part of the rim strip rubber 32 and side-wall rubber 30 in which the RFID tag 40 is arranged.

### <Second Embodiment>

Next, a tire according to a second embodiment will be explained while referencing FIGS. 4A to 4C. It should be noted that the same reference symbol will be attached for the same configurations as the first embodiment in the following explanation, and detailed explanations thereof will be omitted.

FIG. 4A is a view showing the RFID tag 40 covered by a coating rubber sheet constituting the protective member 43. In FIG. 4A, the RFID tag 40 is covered and hidden by the coating rubber sheet 431 described later. FIG. 4B is a cross-sectional view along the line b-b in FIG. 4A, and FIG. 4C is a cross-sectional view along the line c-c in FIG. 4A. In the present embodiment, the RFID tag 40 is covered by the coating rubber sheets 431, 432 constituting the protective member 43, as shown in FIGS. 4A to 4C.

The RFID tag 40 includes an RFID chip 41 and antenna 42 for performing communication with external equipment. As the antenna 42, a coil-shaped spring antenna, plate-shaped antenna, and various types of rod-shaped antennas can be used. When considering the communicability and flexibility, a coil-shaped spring antenna is the most preferable.

The protective member 43 is configured from the two coating rubber sheets 431, 432 which interpose to protect the RFID tag 40.

As the rubber adopted in the protective member 43, rubber having a modulus at least higher than the side-wall rubber 30 is used. For example, rubber is used having a higher modulus than the side-wall rubber 30 and a lower modulus than the rim strip rubber 32. For example, as the rubber used in the protective member 43, if establishing the modulus of the second pad 35 as a reference, it is preferable to use rubber of a modulus of 0.6 to 0.8 times this. It should be noted that, if emphasizing reinforcement of the protection of the RFID tag 40, rubber of a higher modulus than the rim strip rubber 32 may be adopted as the rubber used in the protective member 43.

It should be noted that, as shown in FIGS. 1 and 2, the RFID tag 40 is arranged in a region between the rim strip rubber 32 and side-wall rubber 30. Therefore, by setting the modulus of the protective member 43 to a value higher than the modulus of the side-wall rubber 30 and lower than the modulus of the rim strip rubber 32, it is possible to prevent excessive stress from occurring within the rubber structure at the embedded part of the RFID tag 40 in the case of the tire deforming. In other words, it is possible to suppress the occurrence of stress.

In addition, the protective member 43 may be configured from a short-fiber filler mixed rubber. As the short-fiber filler, for example, it is possible to use insulating short fibers like organic short fibers such as aramid short fibers and cellulose short fibers; inorganic short fibers such as ceramic short fibers as in alumina short fiber, and glass short fiber. By mixing such short-fiber fillers into rubber, it is possible to raise the strength of the rubber. In addition, as the protective member 43, a rubber sheet in the vulcanized state may be used. The rubber sheet in a vulcanized state does not plastically deform as raw rubber, and thus can appropriately protect the RFID tag 40.

In addition, as the protective member 43, an organic fiber layer from polyester fibers or polyamide fibers may be provided. It is also possible to embed an organic fiber layer in the two coating rubber sheets 431, 432.

In this way, if configuring the protective member 43 by two coating rubber sheets, since it is possible to thinly form the RFID tag 40 including the protective member 43, it is favorable upon embedding in the tire 1. In addition, when assembling the RFID tag 40 in the constitutional members of the tire 1 prior to vulcanization, the RFID tag 40 covered by the coating rubber sheets can be installed very easily. For example, at a desired position of a member such as the rim strip rubber 32 prior to vulcanization, it is possible to appropriately paste the RFID tag 40 covered by the coating rubber sheets using the adhesiveness of the raw rubber. In addition, by also establishing the coating rubber sheets as raw rubber prior to vulcanization, it is possible to more easily paste by employing the adhesiveness of the coating rubber sheet itself as well.

However, the protective member 43 is not limited to the form configured by two coating rubber sheets, and can adopt various forms. For example, at least one coating rubber sheet constituting the protective member, so long as covering at least part of the RFID tag 40, can obtain effects such as an improvement in workability in the manufacturing process and stress mitigation. In addition, for example, it may be a configuration wrapping one coating rubber sheet around the entire circumference of the RFID tag 40, or a configuration attaching the protective member in the form of a potting agent of high viscosity along the entire circumference of the RFID tag 40. Even if such a configuration, it will be possible to appropriately protect the RFID tag 40.

It should be noted that the RFID tag 40 covered by the protective member 43 is embedded in the tire so that the longitudinal direction thereof becomes the direction of the tangential line relative to the circumferential direction of the tire, i.e. direction orthogonal to the paper plane in the cross-sectional view of FIGS. 1 and 2. Alternatively, it is embedded in the tire in a form along the circumferential direction of the tire. In addition, the coating rubber sheets 431, 432 are embedded in the tire in a form such that aligns in the tire-width direction. In other words, in the manufacturing process, one surface of either one of the coating rubber sheets 431, 432 is pasted to a constituent member of the tire prior to vulcanization, e.g., the rim strip rubber 32. Then, the RFID tag 40 covered by the protective member 43 is arranged between the rim strip rubber 32 and sidewall rubber 30. By establishing such a form, stress will hardly act on the RFID tag 40, even when the tire deforms. In addition, in the manufacturing process, the work of attaching the RFID tag 40 covered by the protective member 43 becomes easy.

According to the tire of the present embodiment, the following effects are exerted in addition to the above (1) to (3) .

(4) The RFID tag 40 of the present embodiment is covered by the coating rubber sheets 431, 432, and the RFID tag 40 covered by the coating rubber sheets 431, 432 is arranged between the rim strip rubber 32 and side-wall rubber 30. Consequently, it is possible to suitably protect the RFID tag 40.

(5) The coating rubber sheets 431, 432 of the present embodiment are configured from rubber having a higher modulus than the side-wall rubber 30 and lower modulus than the rim strip rubber 32. Consequently, since the modulus of rubber in the tire changes stepwise, in the case of the tire deforming, it is possible to prevent excessive stress occurring within the rubber structure in the RFID tag 40 embedded part.

### <Third Embodiment>

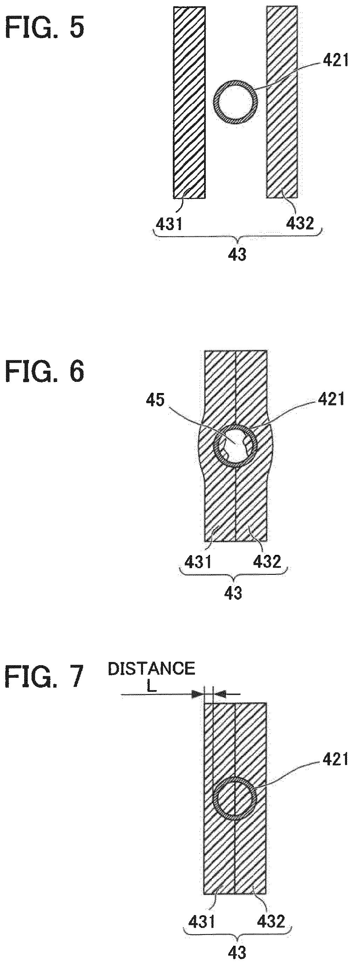

Next, a tire according to a third embodiment will be explained while referencing FIGS. 5 to 11. It should be noted that, in the following explanation, the same reference symbol will be attached for configurations which are the same as the first and second embodiments, and detailed explanations thereof will be omitted. The present embodiment is a particularly preferable embodiment in the case of the antenna of the RFID tag 40 being a coil-shaped spring antenna.

In the RFID tag 40 of the present embodiment, a coil-shaped spring antenna 421 having high communicability and flexibility can be used as the antenna. The spring antenna 421 is set to an antenna length which was optimized according to the frequency band, etc. to be used.

In the present embodiment, prior to interposing the RFID tag 40 by the two coating rubber sheets 431, 432 constituting the protective member 43, the rubber is arranged within the spring antenna 421. More preferably, rubber is filled into the spring antenna, so that air will not remain as much as possible. This process and the reason for adopting this process will be explained using FIGS. 5 to 11.

First, a state of the surroundings of the RFID tag 40 in a case of not filling rubber into the spring antenna 421 will be explained as a reference example using FIGS. 5 to 7. FIG. 5 is a view showing a cross section of the spring antenna 421, and coating rubber sheets 431, 432, prior to interposing the RFID tag 40 by the coating rubber sheets 431, 432. FIG. 6 is a view showing a cross section of the spring antenna 421, and coating rubber sheets 431, 432, after interposing the RFID tag 40 by the coating rubber sheets 431, 432.

As shown in FIG. 6, in this reference example, since rubber is not filled into the spring antenna 421 in advance, a certain amount of air 45 may remain within the spring antenna 421 after interposing by the coating rubber sheets 431, 432. If air remains in this way, the integrity of the coating rubber sheets 431, 432 and the spring antenna 421 becomes insufficient, and when the tire deforms, there is concern over the spring antenna 421 not following the motion of the rubber, and the RFID tag 40 having the spring antenna 421 being damaged.

It should be noted that raw rubber before vulcanization is used as the coating rubber sheets 431, 432 herein. Consequently, by pushing the coating rubber sheets 431, 432 from both sides, the coating rubber sheets 431, 432 sticks to some extent inside the spring antenna as shown in FIG. 6. However, very large amounts of time and labor are required in order to stick the coating rubber sheets 431, 432 until the inside of the spring antenna is completely embedded.

Then, even if assuming a case of taking time and sticking the rubber sheets until the inside of the spring antenna is embedded, the distance L between the outer circumferential part of the spring antenna 421 and the outer surface of the coating rubber sheets 431, 432 becomes very short, as shown in FIG. 7. In addition, it is difficult to stabilize this distance L, and locally thin portions can occur. Consequently, the protection of the RFID tag 40 by the coating rubber sheets 431, 432 becomes insufficient, and during vulcanization, there is a possibility of the coating rubber sheets 431, 432 being damaged.

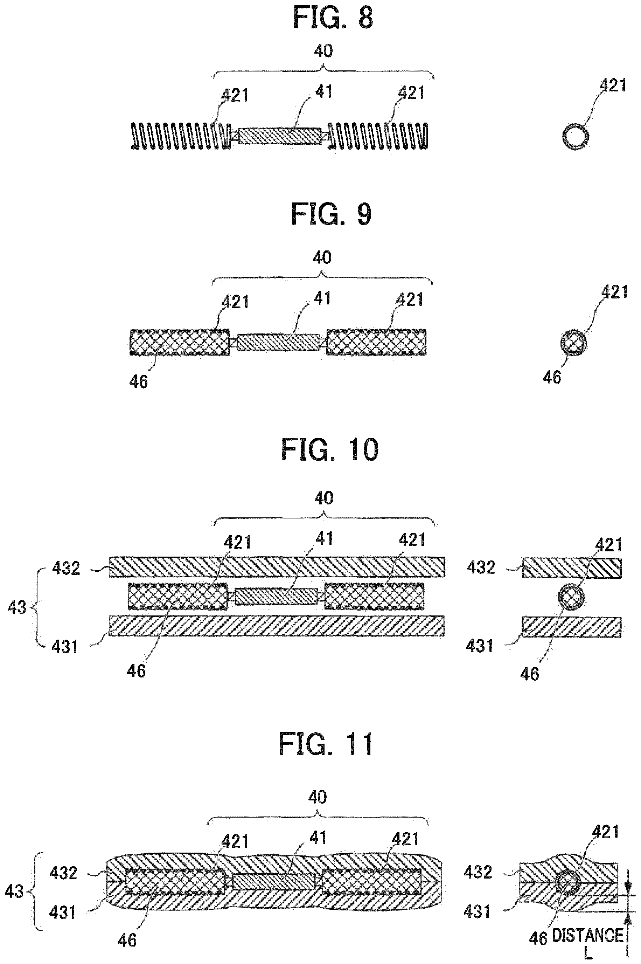

Therefore, in the present embodiment, prior to interposing the RFID tag 40 by the coating rubber sheets 431, 432, the rubber is arranged within the spring antenna 421, as shown in FIGS. 8 to 11. More preferably, rubber is filled within the spring antenna so that air does not remain as much as possible. It should be noted that the views shown on the right sides of FIGS. 8 to 11 are views showing a transverse section of the spring antenna 421 and the surrounding thereof.

FIG. 8 is a view showing a state prior to filling the rubber 46 into the spring antenna 421, and FIG. 9 is a view showing a state after filling the rubber 46 into the spring antenna 421. The rubber 46 is embedded so as to be almost the same outside diameter as the outer circumferential face of the spring antenna 421. Then, in the case of the rubber 46 escaping from the outer circumferential face of the spring antenna 421, it is preferable to wipe off this portion. In other words, the outer circumferential face of the rubber 46 is preferably molded so as to become substantially the same surface as the outer circumferential face of the spring antenna 421. It should be noted that the rubber 46 may be filled into the spring antenna 421, and the outer circumference of the spring antenna 421 may be thinly wrapped by the rubber 46. On the other hand, if thickly wrapping the spring antenna 421 by the rubber 46, in addition to the flexibility of the spring antenna 421 being harmed, the dimension in the width direction formed by the coating rubber sheets 431, 432 after interposing the RFID tag 40 becomes larger, which is not preferable. It should be noted that the rubber 46 may be embedded so as to become substantially the same outside diameter as the inner circumferential face of the spring antenna 421. It is desirable for the outer circumferential part of the rubber 46 to be located within the range of the inner circumferential face and outer circumferential face of the spring antenna 421.

Herein, rubber having flexibility is used as the rubber 46 in order to ensure the flexibility of the spring antenna 421. However, it is preferable to use rubber of a modulus higher than the coating rubber sheets 431, 432 as the rubber 46, in consideration of the workability, etc. It should be noted that preferably unvulcanized rubber is used as the rubber 46 arranged within the spring antenna 421. By establishing the rubber 46 and coating rubber sheets 431, 432 as unvulcanized rubber and vulcanizing simultaneously, the integrity of the rubber 46, coating rubber sheets 431, 432 and spring antenna 421 rises. In addition, the rubber 46, and coating rubber sheets 431, 432 are more preferably established as the same type of rubber. It should be noted that, by emphasizing the flexibility of the spring antenna 421, rubber of lower modulus than the coating rubber sheets 431, 432 may be used as the rubber 46. In addition, rubber of substantially the same modulus, and rubber of the same material may be used. It should be noted that vulcanized rubber may be used as the rubber 46 arranged within the spring antenna 421. In addition, rubber-based adhesive, rubber-based filler, etc. can also be used. Taking account of configuring so as not to leave air within the spring antenna 421 as much as possible, while ensuring flexibility, it is possible to adopt various rubber-based materials. As the arranging operation of the rubber 46, various methods can be adopted; however, for example, it is also possible to inject rubber into the spring antenna 421 using a syringe. In this case, a set appropriate amount of the rubber 46 may be filled using a syringe. In addition, after filling a large amount of the rubber 46, portions protruding from the outer circumference of the spring antenna 421 may be wiped off.

FIG. 10 is a view showing a state prior to interposing the RFID tag 40 into which the rubber 46 is filled in the spring antenna 421, by the coating rubber sheets 431, 432, and FIG. 11 is a view showing a state after interposing by the coating rubber sheets 431, 432.

As shown in FIG. 11, according to the present embodiment, since the rubber 46 is filled in advance into the spring antenna 421, no air pockets exist between the coating rubber sheets 431, 432. Consequently, since it is unnecessary to be concerned over air pockets, the process of interposing the RFID tag 40 by the coating rubber sheets 431, 432 also becomes easy. In addition, by the rubber 46 being arranged within the spring antenna 421, the integrity of the spring antenna 421, rubber 46, and coating rubber sheets 431, 432 rises, and when the tire deforms, the spring antenna 421 follows the movement of the rubber. Consequently, the durability of the RFID tag 40 having the spring antenna 421 also improves.

In addition, according to the present embodiment, the distance L between the outer circumferential part of the spring antenna 421 and the outer circumferential face of the coating rubber sheets 431, 432 stabilizes. In other words, a distance close to the thickness of the coating rubber sheets 431, 432 is generally secured as this distance L. Consequently, the RFID tag 40 is sufficiently protected by the coating rubber sheets 431, 432. In the present embodiment, the RFID tag 40 interposed by the coating rubber sheets 431, 432 is fixedly set up in the rim strip rubber 32, etc., and subsequently, the green tire is vulcanized.

It should be noted that, in the present embodiment, the RFID tag 40 into which the rubber 46 was filled in advance within the spring antenna 421 is arranged so as to be sandwiched between the rim strip rubber 32 and side-wall rubber 30 upon being covered by the coating rubber sheets 431, 432. However, the RFID tag 40 in which the rubber 46 was filled in advance into the spring antenna 421 may be interposed directly between the rim strip rubber 32 and side-wall rubber 30, without covering by the coating rubber sheets 431, 432. By interposing the uncoated RFID tag 40 directly between the rim strip rubber 32 and the side-wall rubber 30 in this way, the fluctuation in thickness of the rubber member at a portion interposing the RFID tag 40 decreases, and thus the uniformity of the tire 1 improves. In addition, since the rubber 46 is filled into the spring antenna 421 in advance, the side-wall rubber 30 will not excessively sink into the spring antenna.

According to the tire related to the present embodiment, the following effects are exerted in addition to the above-mentioned (1) to (5).

(11) In the present embodiment, the RFID tag 40 serving as the electronic component having a communication function has the spring antenna 421, and a step is included of arranging the rubber 46 in the spring antenna 421, prior to the step of pasting the RFID tag 40 to the rim strip rubber 32 or side-wall rubber 30. Upon the step of interposing the spring antenna 421 of the RFID tag 40 between rubber members, since it becomes unnecessary to be concerned over air pockets, the assembly property becomes favorable.

(12) The present embodiment provides a step of arranging the rubber 46 within the spring antenna 421 of the RFID tag 40 serving as an electronic component having a communication function; a step of interposing the RFID tag 40 having the spring antenna 421 into which the rubber 46 was arranged, by the coating rubber sheets 431, 432, and an arrangement step of arranging the RFID tag 40 interposed by the coating rubber sheets 431, 432 between the rim strip rubber 32 and sidewall rubber 30. The air 45 will thereby not remain inside the spring antenna 421. In addition, since it is unnecessary to be concerned about air pockets, the work of interposing the RFID tag 40 by the coating rubber sheets 431, 432 also becomes easy. In addition, since the distance L between the outer circumferential part of the spring antenna 421 and the outer surface of the coating rubber sheets 431, 432 is stabilized, the RFID tag 40 is sufficiently protected by the coating rubber sheets 431, 432. In the case of an embodiment in which the RFID tag 40 is embedded between the rim strip rubber 32 and side-wall rubber 30 as in the tire of the present embodiment, i.e. case of being embedded in a portion of the tire near the outer surface, such air pocket countermeasures and enhanced protection measures are particularly effective.

(13) The present embodiment includes: a step of arranging the rubber 46 within the spring antenna 421 of the RFID tag 40 serving as an electronic component having a communication function; and a step of pasting the rim strip rubber 32 and side-wall rubber 30 so as to interpose the uncoated RFID tag 40 between the rim strip rubber 32 and side-wall rubber 30. By interposing the uncoated electronic component directly between the rim strip rubber 32 and side-wall rubber 30, the fluctuation in thickness of the rubber member at the portion interposing the RFID tag 40 decreases, and thus the uniformity of the tire improves. In addition, since the rubber 46 is filled in advance into the spring antenna 421, the rubber sheet 37 will not excessively sink into the spring antenna.

It should be noted that, although the tire of the present invention can be adopted as various types of tires such as for cars, light trucks, trucks and buses, it is particularly suitable as a tire of a truck, bus, etc. It should be noted that the present invention is not to be limited to the above-mentioned embodiments, and that even when carrying out modifications, improvements, etc. within a scope of the appended claims, it is encompassed by the scope of the present invention.

### EXPLANATION OF REFERENCE NUMERALS

- 1: tire
- 11: bead
- 12: tread
- 13: side wall
- 21: bead core
- 22: bead filler
- 221: first bead filler
- 222: second bead filler
- 23: carcass ply
- 24: ply main body
- 25: ply folding part
- 25A: folding end
- 26: steel belt
- 28: tread rubber
- 29: inner liner
- 30: side-wall rubber
- 30B: tire-radial direction inside end
- 31: steel chafer
- 31A: end part of steel chafer
- 32: rim strip rubber
- 32A: tire-radial direction outside end
- 34: pad member
- 35: first pad
- 36: second pad
- 37: rubber sheet
- 40: RFID tag
- 41: RFID chip
- 42: antenna
- 431: spring antenna
- 43: protective member
- 431, 432: coating rubber sheet
- 46: rubber

## Claims

1. A tire (1) comprising:
a bead core (21); a bead filler (22) which extends to an outer side in a tire-radial direction of the bead core (21); a carcass ply (23) which extends from the bead core (21) to another bead core (21) and is folded around the bead core (21);
a rim strip rubber (32) which is arranged at least at an outer side in a tire-width direction of the carcass ply (23) which has been folded back around the bead core (21); and
a side-wall rubber (30) covering a part on an outer side in the tire-width direction of the rim strip rubber (32),
wherein an electronic component (40) is provided between the rim strip rubber (32) and the side-wall rubber (30);
**characterized in that**
the electronic component (40) is covered by a coating rubber sheet (431, 432),
the coating rubber sheet (431, 432) is configured from rubber having a higher modulus than the side-wall rubber (30), and a lower modulus than the rim strip rubber (32), and
the modulus indicates 100% elongation modulus (M100) under a 23°C atmosphere, measured in accordance with "3.7 stress at a given elongation, S" of JIS K6251:2010.

2. The tire (1) according to claim 1, wherein
when establishing a length of a line indicating a boundary surface of the rim strip rubber (32) and the side-wall rubber (30) in a cross-sectional view in the tire-width direction as a reference distance,
the electronic component (40) is disposed between the rim strip rubber (32) and the side-wall rubber (30) within a range up to a position 50% of the reference distance from a position at a tire-radial direction outside end (32A) of the rim strip rubber (32) towards a tire-radial direction inside end (30B) of the side-wall rubber (30).

3. The tire (1) according to claim 1 or 2, further comprising a pad member (34) which covers an outer side in the tire-width direction of a folding end (25A) of the carcass ply (23),
wherein the rim strip rubber (32) covers part of an outer side in the tire-width direction of the pad member (34), and
wherein the side-wall rubber (30) covers a part on an outer side in the tire-width direction of the rim strip rubber (32) and a part on an outer side in the tire-width direction of the pad member (34).

## Patentansprüche

1. Reifen (1), aufweisend:
einen Wulstkern (21); einen Kernreiter (22), der sich zu einer Außenseite in einer Reifen-Radialrichtung des Wulstkerns (21) erstreckt; eine Karkassenlage (23), die sich von dem Wulstkern (21) zu einem anderen Wulstkern (21) erstreckt und um den Wulstkern (21) umgeschlagen ist; und
einen Felgenbandgummi (32), der zumindest an einer Außenseite in einer Reifenbreitenrichtung der Karkassenlage (23) angeordnet ist, die um den Wulstkern (21) umgeschlagen wurde; und
einen Seitenwandgummi (30), der einen Teil einer Außenseite in der Reifenbreitenrichtung des Felgenbandgummis (32) bedeckt,
wobei ein elektronisches Bauteil (40) zwischen dem Felgenbandgummi (32) und dem Seitenwandgummi (30) vorgesehen ist;
**dadurch gekennzeichnet, dass**
das elektronische Bauteil (40) von einer Gummidecklage (431, 432) bedeckt ist,
die Gummidecklage (431, 432) aus Gummi gestaltet ist, der einen höheren Modul als der Seitenwandgummi (30) und einen niedrigeren Modul als der Felgenbandgummi (32) aufweist, und
der Modul der Dehnungsmodul bei 100 % Dehnung (M100) unter einer Atmosphäre von 23 °C ist, gemessen gemäß "3.7 Spannung bei gegebener Dehnung S" nach JIS K6251:2010.

2. Reifen (1), nach Anspruch 1, wobei,
wenn eine Länge einer Linie, die in einer Querschnittansicht in der Reifenbreitenrichtung eine Grenzfläche des Felgenbandgummis (32) und des Seitenwandgummis (30) anzeigt, als ein Referenzabstand ermittelt wird,
das elektronische Bauteil (40) zwischen dem Felgenbandgummi (32) und dem Seitenwandgummi (30) in einem Bereich bis zu einer Position an 50 % des Referenzabstands von einer Position an einem äußeren Ende (32A) in der Reifen-Radialrichtung des Felgenbandgummis (32) hin zu einem inneren Ende (30B) in der Reifen-Radialrichtung des Seitenwandgummis (30) angeordnet ist.

3. Reifen (1) nach Anspruch 1 oder 2, ferner umfassend ein Polsterelement (34), welches eine Außenseite in der Reifenbreitenrichtung eines Umschlagendes (25A) der Karkassenlage (23) bedeckt,
wobei der Felgenbandgummi (32) einen Teil einer Außenseite in der Reifenbreitenrichtung des Polsterelements (34) bedeckt, und
wobei der Seitenwandgummi (30) einen Teil an einer Außenseite in der Reifenbreitenrichtung des Felgenbandgummis (32) und einen Teil an einer Außenseite in der Reifenbreitenrichtung des Polsterelements (34) bedeckt.

## Revendications

1. Pneu (1) comprenant :
une tringle de talon (21) ; un bourrage sur tringle (22) s'étendant vers un côté externe, dans une direction radiale du pneu, de la tringle de talon (21) ; une toile de pneu (23) s'étendant de la tringle de talon (21) à une autre tringle de talon (21) et étant pliée autour de la tringle de talon (21) ;
un caoutchouc de fond de jante (32) disposé au moins au niveau d'un côté externe, dans une direction de la largeur du pneu, de la toile de pneu (23) ayant été repliée autour de la tringle de talon (21) ; et
un caoutchouc de paroi latérale (30) recouvrant une partie sur un côté externe, dans la direction de la largeur du pneu, du caoutchouc de fond de jante (32),
un composant électronique (40) étant disposé entre le caoutchouc de fond de jante (32) et le caoutchouc de paroi latérale (30) ;
**caractérisé en ce que**
le composant électronique (40) est recouvert d'une feuille en caoutchouc de revêtement (431, 432),
la feuille en caoutchouc de revêtement (431, 432) est conçue à partir d'un caoutchouc présentant un module supérieur à celui du caoutchouc de paroi latérale (30), et un module inférieur à celui du caoutchouc de fond de jante (32), et
le module indique un module d'allongement à 100 % (M100), sous une atmosphère à 23 °C, mesuré selon la « contrainte 3.7 à un allongement donné, S » de la norme JIS K 6251:2010.

2. Le pneu (1) selon la revendication 1, dans lequel
lors de l'établissement d'un segment d'une ligne indiquant une surface limite du caoutchouc de fond de jante (32) et du caoutchouc de paroi latérale (30), dans une vue en section transversale dans la direction de la largeur du pneu, en tant que distance de référence,
le composant électronique (40) est disposé entre le caoutchouc de fond de jante (32) et le caoutchouc de paroi latérale (30) dans une plage jusqu'à une position à 50 % de la distance de référence à partir d'une position au niveau d'une extrémité extérieure (32A), dans la direction radiale du pneu, du caoutchouc de fond de jante (32) vers une extrémité intérieure (30B), dans la direction radiale du pneu, du caoutchouc de paroi latérale (30).

3. Le pneu (1) selon les revendications 1 ou 2, comprenant en outre un élément tampon (34) destiné à recouvrir un côté externe, dans la direction de la largeur du pneu, d'une extrémité de pliage (25A) de la toile de pneu (23),
le caoutchouc de fond de jante (32) recouvrant une partie d'un côté externe, dans la direction de la largeur du pneu, de l'élément tampon (34), et
le caoutchouc de paroi latérale (30) recouvrant une partie sur un côté externe, dans la direction de la largeur du pneu, du caoutchouc de fond de jante (32), et une partie sur un côté externe, dans la direction de la largeur du pneu, de l'élément tampon (34).
